(19) Europäisches Patentamt
European Patent Office
Office européen des brevets

(11) **EP 2 507 649 B1**

(12) **EUROPÄISCHE PATENTSCHRIFT**

(45) Veröffentlichungstag und Bekanntmachung des Hinweises auf die Patenterteilung:
**08.04.2015 Patentblatt 2015/15**

(21) Anmeldenummer: **10809268.5**

(22) Anmeldetag: **06.12.2010**

(51) Int Cl.:
*G01S 13/93* (2006.01)    *G01S 13/28* (2006.01)
*G01S 13/58* (2006.01)    *G01S 13/22* (2006.01)
*G01S 13/87* (2006.01)    *G01S 13/48* (2006.01)
*G01S 13/34* (2006.01)

(86) Internationale Anmeldenummer:
**PCT/EP2010/007382**

(87) Internationale Veröffentlichungsnummer:
**WO 2011/066993 (09.06.2011 Gazette 2011/23)**

(54) **VERFAHREN ZUM EINDEUTIGEN BESTIMMEN EINER ENTFERNUNG UND/ODER EINER RELATIVEN GESCHWINDIGKEIT EINES OBJEKTES, FAHRERASSISTENZEINRICHTUNG UND KRAFTFAHRZEUG**

METHOD FOR UNAMBIGUOUSLY DETERMINING A RANGE AND/OR A RELATIVE SPEED OF AN OBJECT, DRIVER ASSISTANCE DEVICE AND MOTOR VEHICLE

PROCÉDÉ DE DÉTERMINATION UNIVOQUE D'UNE DISTANCE ET/OU D'UNE VITESSE RELATIVE D'UN OBJET, SYSTÈME D'ASSISTANCE AU CONDUCTEUR ET VÉHICULE À MOTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.12.2009 DE 102009057191**

(43) Veröffentlichungstag der Anmeldung:
**10.10.2012 Patentblatt 2012/41**

(73) Patentinhaber: **Valeo Schalter und Sensoren GmbH**
**74321 Bietigheim-Bissingen (DE)**

(72) Erfinder:
• **LUEBBERT, Urs**
**74321 Bietigheim-Bissingen (DE)**
• **HABERLAND, Udo**
**71088 Holzgerlingen (DE)**

(74) Vertreter: **Jauregui Urbahn, Kristian**
**Valeo Schalter und Sensoren GmbH**
**CDA-IP**
**Laiernstraße 12**
**74321 Bietigheim-Bissingen (DE)**

(56) Entgegenhaltungen:
**EP-A1- 1 186 907    DE-A1-102006 020 943**
**US-A- 4 053 884    US-A- 5 657 022**
**US-B1- 6 587 074**

**Beschreibung**

Die Erfindung betrifft ein Verfahren zum eindeutigen Bestimmen einer Entfernung und/oder einer relativen Geschwindigkeit eines Objektes bezüglich eines Kraftfahrzeugs mittels eines Frequenzmodulation-Dauerstrich-Radargeräts des Kraftfahrzeugs. In einem einzelnen Messzyklus wird durch das Frequenzmodulation-Dauerstrich-Radargerät eine vorbestimmte Folge von frequenzmodulierten Signalpulsen (Chirps) gesendet. Durch die Folge von frequenzmodulierten Signalpulsen ist ein Eindeutigkeitsbereich für die Bestimmung der Entfernung und/oder ein Eindeutigkeitsbereich für die Bestimmung der relativen Geschwindigkeit bestimmt. Die Erfindung betrifft außerdem eine Fahrerassistenzeinrichtung sowie ein Fahrzeug mit einer solchen Fahrerassistenzeinrichtung.

Also gilt das Interesse vorliegend einem Frequenmodulation-Dauerstrich-Radargerät (Frequency Modulated Continuous Wave Radar). Dieses wird nachfolgend als FMCW-Radargerät oder einfach als Radargerät bezeichnet. Die Funktionsweise eines solchen Radargeräts ist wie folgt: Das Radargerät sendet in einem Messzyklus eine vorbestimmte Anzahl von frequenzmodulierten Signalpulsen (auch unter der Bezeichnung "Chirps" bekannt) als Sendesignal. Das Radargerät empfängt dann ein Empfangssignal, welches das von einem Objekt reflektierte Sendesignal ist. Das Sendesignal wird mit dem Empfangssignal verglichen. Zwei wesentliche Messgrößen des Radargeräts sind die Entfernung und die relative Geschwindigkeit. Die Entfernung wird durch die Laufzeit des Sendesignals ermittelt; die relative Geschwindigkeit wird durch die Änderung der Frequenz des Sendesignals aufgrund des Dopplereffekts ermittelt.

Der Einsatz von solchen Radargeräten in Kraftfahrzeugen ist bereits aus dem Stand der Technik bekannt. Die Druckschrift DE 10 2005 048 209 A1 beschreibt ein Kraftfahrzeug mit einem solchen FMCW-Radargerät. Dieses Verfahren zeichnet sich dadurch aus, dass in vorbestimmten Zeitabschnitten innerhalb eines Messzyklus lediglich die Entfernung, nicht aber die relative Geschwindigkeit für Objekte in wenigstens einem Teilbereich der Umgebung des Kraftfahrzeugs bestimmt wird. Durch das Radargerät wird in einem Messzyklus und pro Radarkeule (pro Beam) eine Folge von 16 bis 64 frequenzmodulierten Signalpulsen mit jeweils einer Zeitdauer von etwa 250 µs ausgesendet; das Empfangssignal für die gesamte Folge von Signalpulsen wird dann kohärent ausgewertet. Es wird hierdurch eine relativ hohe Auflösung der Dopplerfrequenz, wie auch ein relativ hoher Signal-zu-Rausch-Abstand (SNR) ermöglicht, dies bei gleichzeitig guter Ausnutzung der zur Verfügung stehenden Messzeit. Die Parameter des Sendesignals sowie die Systemparameter wurden so gewählt, dass mit den vorhandenen Komponenten gute Messergebnisse erzielt werden konnten, nämlich insbesondere aufgrund der gewählten Zeitdauer des einzelnen Signalpulses von 250 µs sowie aufgrund einer Abtastrate eines Analog-Digital-Wandlers für das Empfangssignal. Die Abtastrate beträgt hier 1 MHz.

Die Messung der beiden Größen - der Entfernung und der relativen Geschwindigkeit-unterliegt in der Realität Einschränkungen: Die Auflösung und die Eindeutigkeit der Messung sind beschränkt. Prinzipiell gilt, dass ein Radargerät mehrere Ziele gleichzeitig verarbeiten kann. Das Auflösungsvermögen des Radargeräts gibt an, wie weit die Ziele voneinander beabstandet sein müssen, damit sie vom Radargerät als zwei getrennte Ziele detektiert werden können. Mit dem Radargerät gemäß Druckschrift DE 2005 048 209 A1 können Ziele sowohl nach Entfernung als nach Geschwindigkeit aufgelöst werden. Eine Auflösung der Entfernung von beispielsweise 1 m bedeutet, dass zwei Ziele in ihrer Entfernung zum Radar mindestens 1 m auseinander liegen müssen, um vom Radargerät aufgelöst werden zu können.

Wie bereits ausgeführt, kann die Messung der Entfernung, wie auch die Messung der relativen Geschwindigkeit mehrdeutig sein. Dies kommt in der Regel durch Abtastungseffekte zustande. Das Problem der Mehrdeutigkeit veranschaulicht das nachfolgende Beispiel: Ein Radar kann zum Beispiel Ziele bis zu einer maximalen Reichweite von 300 m detektieren. Die Eindeutigkeit der Entfernung (der Eindeutigkeitsbereich) kann aber beispielsweise bei 100 m und somit deutlich unterhalb der maximalen Reichweite des Radargeräts liegen. In diesem Fall bedeutet ein Messwert für die Entfernung von etwa 10 m, dass das Ziel 10 m, 110 m oder 210 m vom Radargerät entfernt sein kann.

Die Wahl der Parameter des Sendesignals, wie auch der Systemparameter beeinflusst den Eindeutigkeitsbereich für die Bestimmung der Entfernung sowie den Eindeutigkeitsbereich für die Bestimmung der Geschwindigkeit. Im Falle der genannten Parameter - wie oben ausgeführt - liegt der Eindeutigkeitsbereich für die Entfernung bei etwa 100 m und der Eindeutigkeitsbereich für die Bestimmung der Geschwindigkeit bei etwa 80 km/h. Jedoch können in der Praxis auch Ziele durch das Radargerät detektiert werden, die deutlich über 100 m vom Radargerät entfernt sind. In der Praxis, insbesondere auf den Autobahnen, können außerdem relative Geschwindigkeiten zwischen -200 km/h und +200 km/h auftreten. Es ist also eine große Herausforderung, die Eindeutigkeitsbereiche für die Entfernung und die Geschwindigkeit insgesamt zu erhöhen.

Um den Eindeutigkeitsbereich für die Bestimmung der Entfernung zu erhöhen, könnte prinzipiell die Abtastrate des Analog-Digital-Wandlers im Empfänger erhöht werden. Diese Lösung ist jedoch nicht optimal. Die Erhöhung der Abtastrate des Analog-Digital-Wandlers erhöht die Kosten für diese Komponente. Auf der anderen Seite könnte der Eindeutigkeitsbereich für die Bestimmung der Geschwindigkeit dadurch erhöht werden, dass die Zeitdauer eines einzelnen frequenzmodulierten Signalpulses reduziert wird. Für eine gleichbleibende Auflösung der Entfernung müsste dann jedoch die Abtastrate des Analog-Digital-Wandlers entsprechend erhöht werden; und für die gleiche Auflösung der Dopplerfrequenz müssten auch entsprechend mehr Signalpulse gesendet werden. Es entsteht wiederum das Problem der erhöhten Hardwarekosten.

Es ist Aufgabe der Erfindung, eine Lösung aufzuzeigen, wie bei einem Verfahren der eingangs genannten Gattung der Eindeutigkeitsbereich für die Bestimmung der Entfernung und/oder der Eindeutigkeitsbereich für die Bestimmung der relativen Geschwindigkeit im Vergleich zum Stand der Technik insgesamt erhöht werden kann/können.

Diese Aufgabe wird erfindungsgemäß durch ein Verfahren mit den Merkmalen gemäß Patentanspruch 1 gelöst, wie auch durch eine Fahrerassistenzeinrichtung mit den Merkmalen gemäß Patentanspruch 9 sowie ein Kraftfahrzeug mit den Merkmalen gemäß Patentanspruch 10. Vorteilhafte Ausführungen der Erfindung sind Gegenstand der abhängigen Patentansprüche und der Beschreibung.

Ein erfindungsgemäßes Verfahren ist zum eindeutigen Bestimmen einer Entfernung und/oder einer relativen Geschwindigkeit eines Objektes bezüglich eines Kraftfahrzeugs mittels eines FMCW-Radargeräts des Kraftfahrzeugs ausgelegt. Das Radargerät sendet in einem Messzyklus eine vorbestimmte Folge von frequenzmodulierten Signalpulsen (Chirps). Durch die vorbestimmte Folge von frequenzmodulierten Signalpulsen ist/sind ein Eindeutigkeitsbereich für die Entfernung und/oder ein Eindeutigkeitsbereich für die relative Geschwindigkeit vorbestimmt. Es werden erfindungsgemäß zumindest zwei-insbesondere unmittelbar nacheinander folgende - Messzyklen bereitgestellt, die sich hinsichtlich ihrer Eindeutigkeitsbereiche für die Entfernung und/oder hinsichtlich ihrer Eindeutigkeitsbereiche für die relative Geschwindigkeit voneinander unterscheiden. Die Entfernung und/oder die relative Geschwindigkeit wird dann anhand von jeweils zumindest einem Messwert für die Entfernung respektive die relative Geschwindigkeit aus jedem Messzyklus bestimmt.

Also werden für zumindest zwei aufeinander folgende Messzyklen sich voneinander unterscheidende Eindeutigkeitsbereiche für die Entfernung und/oder sich voneinander unterscheidende Eindeutigkeitsbereiche für die relative Geschwindigkeit vorgegeben. Zum Beispiel kann das Radargerät in einem ersten Messzyklus eine solche Folge von frequenzmodulierten Signalpulsen senden, durch welche ein erster Eindeutigkeitsbereich für die Entfernung und ein erster Eindeutigkeitsbereich für die relative Geschwindigkeit festgelegt werden. Das Radargerät kann in einem zweiten Messzyklus beispielsweise eine solche Folge von frequenzmodulierten Signalpulsen senden, durch welche ein zweiter Eindeutigkeitsbereich für die Entfernung sowie ein zweiter Eindeutigkeitsbereich für die relative Geschwindigkeit vorbestimmt sind. Auf diesem Wege gelingt es, insgesamt den Eindeutigkeitsbereich für die Entfernung und/oder den Eindeutigkeitsbereich für die relative Geschwindigkeit im Vergleich zum Stand der Technik zu erhöhen und somit eine eindeutige Bestimmung der Entfernung und/oder der relativen Geschwindigkeit zu gewährleisten. Die Erfindung baut somit auf der Erkenntnis auf, dass zur Erhöhung des gesamten Eindeutigkeitsbereichs der gesamten Messung mehrere Messungen mit unterschiedlichen Eindeutigkeitsbereichen vorgenommen werden können. Durch Vergleich der Messwerte aus den mehrdeutigen Messungen kann dann auf einen eindeutigeren Messwert geschlossen werden.

Besonders bevorzugt werden für zumindest zwei aufeinander folgende Messzyklen sowohl unterschiedliche Eindeutigkeitsbereiche für die Entfernung als auch unterschiedliche Eindeutigkeitsbereiche für die relative Geschwindigkeit vorgegeben. Dann können insgesamt die beiden Eindeutigkeitsbereiche der gesamten Messung im Vergleich zum Stand der Technik erhöht und eindeutige Messungen gewährleistet werden.

Für das Festlegen von unterschiedlichen Eindeutigkeitsbereichen für die Entfernung kann prinzipiell die Abtastrate eines Analog-Digital-Wandlers eines Empfängers des Radargeräts zwischen zumindest zwei verschiedenen Messzyklen verändert werden. Es hat sich jedoch als vorteilhaft herausgestellt, wenn das Festlegen von unterschiedlichen Eindeutigkeitsbereichen für die Entfernung beinhaltet, dass sich voneinander unterscheidende Frequenzhübe der jeweiligen Folgen von frequenzmodulierten Signalpulsen eingestellt werden. Dies bedeutet, dass in den zumindest zwei Messzyklen jeweils unterschiedliche Frequenzhübe der Folgen von Signalpulsen vorgegeben werden. Zum Beispiel kann in einem ersten Messzyklus ein erster Frequenzhub für die gesamte Folge von frequenzmodulierten Signalpulsen eingestellt werden; in einem zweiten Messzyklus kann ein anderer zweiter Frequenzhub für die gesamte Folge von frequenzmodulierten Signalpulsen eingestellt werden. Durch Änderung des Frequenzhubes kann der Eindeutigkeitsbereich für die Entfernung auf technisch einfache Weise verändert werden. Es ist auch sinnvoll möglich, die Änderung des Frequenzhubes zwischen den einzelnen Messzyklen mit der Änderung der Abtastrate des Analog-Digital-Wandlers zu kombinieren.

Also kann der Frequenzhub von Messzyklus zu Messzyklus variiert werden. Diese Ausführungsform kann zum Beispiel in einem solchen Szenario verwirklicht werden: In einem ersten Messzyklus wird bei einer mittleren Frequenz 24 GHz ein Frequenzhub von 250 MHz verwendet. In einem zweiten Messzyklus wird ein Frequenzhub von 257 MHz eingestellt. In einem dritten Messzyklus wird ein Frequenzhub von 264 MHz festgelegt. Die Frequenzhübe können also nur leicht variiert werden. Durch die Änderung der Frequenzhübe ändert sich bei jedem Messzyklus und somit bei jeder Messung der Eindeutigkeitsbereich für die Bestimmung der Entfernung. Wie weiter unten ausgeführt wird, geht es bei der Bestimmung der Entfernung jedoch nicht um Auflösung von Mehrdeutigkeiten sondern bevorzugt lediglich um die Aussortierung von solchen Zielen, die sich außerhalb der jeweiligen Eindeutigkeitsbereiche für die Entfernung befinden (sogenannte Überreichweiten).

Das Festlegen von unterschiedlichen Eindeutigkeitsbereichen für die relative Geschwindigkeit kann beinhalten, dass sich voneinander unterscheidende Impulsfolgefrequenzen (Puls Repetition Frequency) der jeweiligen Folgen von frequenzmodulierten Signalpulsen eingestellt werden. Dies bedeutet, dass für zumindest zwei aufeinander folgende Messzyklen jeweils unterschiedliche Impulsfolgefrequenzen eingestellt werden können. Zum Beispiel kann in einem ersten Zyklus eine erste Impulsfolgefrequenz für die gesamte Folge von frequenzmodulierten Signalpulsen festgelegt werden; in einem zweiten Messzyklus kann beispielsweise eine zweite Impulsefolgefrequenz für die Folge von frequenzmodulierten Signalpulsen eingestellt werden. Dies kann zum Beispiel so aussehen, dass die Impulsfolgefrequenz zwischen den Messzyklen dadurch variiert wird, dass zwischen den einzelnen frequenzmodulierten Signalpulsen eine Pause vorbestimmter Zeitdauer eingeführt wird. Diese Pause kann dann von Messzyklus zu Messzyklus variiert werden. Dadurch ändert sich dann bei jeder Messung der Eindeutigkeitsbereich für die Bestimmung der relativen Geschwindigkeit. Im speziellen können drei verschiedene Zeitdauern für die Pause verwendet werden. In einem ersten Messzyklus kann bei einer Zeitdauer eines einzelnen Signalpulses von etwa 256 μs eine Zeitdauer für die Pause zwischen den einzelnen Signalpulsen von etwa 144 μs eingestellt werden. Dies ergibt eine Impulsfolgefrequenz von etwa 2,5 kHz. In einem zweiten Messzyklus kann eine Zeitdauer für die Pause von etwa 244 μs festgelegt werden. Die Impulsfolgefrequenz beträgt dann 2 kHz. In einem dritten Messzyklus kann beispielsweise die Zeitdauer für die Pause etwa 411 μs betragen; die Impulsfolgefrequenz beträgt hier 1,5 kHz. Durch Vergleich der einzelnen Messungen aus drei Messzyklen kann dann die relative Geschwindigkeit eindeutig bestimmt werden; es erhöht sich der gesamte Eindeutigkeitsbereich für die Bestimmung der relativen Geschwindigkeit. Also kann der Eindeutigkeitsbereich für die Bestimmung der relativen Geschwindigkeit ohne viel Aufwand durch Variation der Impulsfolgefrequenz verändert werden.

Wie bereits ausgeführt, wird/werden der Eindeutigkeitsbereich für die Entfernung und/oder der für die Geschwindigkeit für zumindest zwei Messzyklen variiert. Es stehen also mehrdeutige Messwerte für die Entfernung und/oder mehrdeutige Messwerte für die relative Geschwindigkeit aus insgesamt zumindest zwei Messzyklen zur Verfügung. Abhängig von den Messwerten aus jedem Messzyklus kann dann die endgültige Entfernung und/oder die endgültige relative Geschwindigkeit bestimmt werden. Diese Bestimmung wird nachfolgend näher beschrieben:

In einer Ausführungsform werden so genannte Überreichweiten-Ziele für die Bestimmung der Entfernung eliminiert, also solche Ziele, die sich außerhalb der Eindeutigkeitsbereiche befinden. Dies bedeutet, dass bei Überreichweiten-Zielen auf die Bestimmung der Entfernung verzichtet werden kann. Ob ein Objekt ein Überreichweiten-Objekt ist oder sich doch in dem Eindeutigkeitsbereich befindet, kann durch die Auswertung der Messwerte eines jeden Messzyklus überprüft werden. Dies kann zum Beispiel derart erfolgen: Das Radargerät sendet in einem ersten Messzyklus eine Folge von frequenzmodulierten Signalpulsen mit einem ersten vorbestimmten Eindeutigkeitsbereich für die Bestimmung der Entfernung. In einem nachfolgenden zweiten Messzyklus sendet das Radargerät eine andere Folge von frequenzmodulierten Signalpulsen mit einem unterschiedlichen zweiten Eindeutigkeitsbereich für die Bestimmung der Entfernung. Das Radargerät sendet schließlich in einem dritten Messzyklus eine noch andere Folge von frequenzmodulierten Signalpulsen mit einem verschiedenen dritten Eindeutigkeitsbereich für die bestimmte Entfernung. Zu dem ersten, zweiten und dem dritten Messzyklus stehen jeweils mehrere Messwerte für die Entfernung, dies aufgrund des jeweiligen Eindeutigkeitsbereichs und der damit verbundenen Mehrdeutigkeiten. Liegt das Ziel in den jeweiligen Eindeutigkeitsbereichen, so stimmen die jeweils ersten Messwerte aller Messzyklen - d.h. Messwerte für den jeweiligen Eindeutigkeitsbereich - miteinander überein. In diesem Falle wird dann die endgültige Entfernung bestimmt, sie entspricht nämlich den Messwerten für die jeweiligen Eindeutigkeitsbereiche. Stimmen diese Messwerte jedoch nicht überein, so ist dies ein Zeichen dafür, dass sich das Objekt außerhalb der Eindeutigkeitsbereiche befindet. Solche Objekte werden bevorzugt herausgefiltert und dem Fahrer nicht angezeigt. Es ist nämlich vorzugsweise nicht erforderlich, Objekte anzuzeigen, die sich in einem Abstand größer als zum Beispiel 100 m von dem Kraftfahrzeug befinden. Eine maximale Entfernung von etwa 100 m ist also für die angestrebten Applikationen ausreichend. Anstatt die Mehrdeutigkeiten bei der Bestimmung der Entfernung aufzulösen, reicht es, die Ziele außerhalb des ersten Eindeutigkeitsbereiches zu unterdrücken. Somit können Fehler durch die Auflösung der Mehrdeutigkeiten vermieden werden.

Also wird die Entfernung unter Verzicht auf eine Auflösung von Mehrdeutigkeiten bevorzugt nur dann bestimmt, wenn ein auf diejenigen Messwerte aus jedem Messzyklus bezogenes vorbestimmtes Eindeutigkeitskriterium erfüllt wird, welche in dem jeweiligen Eindeutigkeitsbereich liegen. Dieses vorbestimmte Eindeutigkeitskriterium kann beinhalten, dass die Messwerte aus den jeweiligen Eindeutigkeitsbereichen mit einer vorbestimmten Genauigkeit miteinander übereinstimmen, nämlich wie bereits ausgeführt. Stimmen diese Messwerte aus den Eindeutigkeitsbereichen der Messzyklen nicht überein, so wird die Entfernung nicht bestimmt.

Die Zielentfernung ist im Radarempfänger proportional zur Frequenz des Empfangssignals. Der Ausschluss von Überreichweiten könnte somit prinzipiell auch durch einen steilflankigen Tiefpassfilter realisiert werden. Ein solcher kann die Zielechos ab einer bestimmten Frequenz herausfiltern und so Überreichweiten eliminieren. Ein solcher Filter kann ergänzend oder alternativ zu der oben beschriebenen Ausführungsform eingesetzt werden.

Die Bestimmung der relativen Geschwindigkeit kann beinhalten, dass zu einem ersten Messzyklus der zumindest zwei Messzyklen zumindest zwei mögliche (mehrdeutige) Messwerte für die relative Geschwindigkeit ermittelt werden - es werden somit zumindest zwei Hypothesen gebildet. Dann kann derjenige Messwert als ein endgültiger Messwert für die relative Geschwindigkeit verwendet werden, für welchen ein vorbestimmtes Detektionskriterium erfüllt ist. Zum Beispiel kann um jeden möglichen Messwert aus dem ersten Messzyklus ein Toleranzwertebereich definiert werden. Das vorbestimmte Detektionskriterium kann dann beinhalten, dass zumindest eine vorbestimmte Anzahl von Messwerten aus den anderen Messzyklen in den jeweiligen Toleranzwertebereich fallen. Auf diese Art und Weise gelingt es, die relative Geschwindigkeit des Objektes bezüglich des Radargeräts eindeutig zu bestimmen, so dass Mehrdeutigkeiten ausgeschlossen werden.

Diese Ausführungsform kann beispielsweise derart verwirklicht werden: Das Radargerät sendet in einem ersten Messzyklus eine erste Folge von frequenzmodulierten Signalpulsen mit einem ersten Eindeutigkeitsbereich für die Bestimmung der relativen Geschwindigkeit. In dem ersten Messzyklus ergibt sich zunächst grundsätzlich ein einziger Messwert für die relative Geschwindigkeit; dieser Messwert ist jedoch nicht eindeutig. Aufgrund von Mehrdeutigkeiten werden aus diesem Messwert weitere Hypothesen und zu erwartende, mögliche Messwerte bestimmt. Es können beispielsweise zwei, drei oder mehrere zu erwartende Messwerte bestimmt werden. Um jeden dieser möglichen Messwerte wird, vorzugsweise symmetrisch, jeweils ein Toleranzwertebereich - zum Beispiel in der Größenordnung der Auflösung der relativen Geschwindigkeit - definiert. Das Radargerät sendet in einem weiteren Messzyklus eine weitere Folge von frequenzmodulierten Signalpulsen, nämlich mit einem zweiten Eindeutigkeitsbereich, zum Beispiel einem größeren Eindeutigkeitsbereich als in dem ersten Messzyklus. Aus diesem zweiten Zyklus stehen beispielsweise drei Messwerte für die relative Geschwindigkeit zur Verfügung. Es wird nun überprüft, ob diese Messwerte in irgendeinen der Toleranzwertebereiche fallen oder nicht. Das Radargerät sendet in einem dritten Messzyklus eine noch weitere Folge von frequenzmodulierten Signalpulsen, dies mit einem noch größeren dritten Eindeutigkeitsbereich für die relative Geschwindigkeit. Auch hier ergeben sich beispielsweise zwei, drei oder mehrere Messwerte für die relative Geschwindigkeit, und es wird überprüft, ob selbige Messwerte in irgendeinen der festgelegten Toleranzwertebereiche fallen. Schließlich wird überprüft, ob in irgendeinem der Toleranzwertebereiche zum Beispiel zumindest zwei Messwerte gegeben sind oder nicht. Ist dies der Fall, so ist das vorbestimmte Detektionskriterium erfüllt, und derjenige Messwert, zu welchem der Toleranzwertebereich definiert wurde, wird als ein endgültiger Messwert für die relative Geschwindigkeit verwendet, nämlich zum Beispiel für weitere Verarbeitungsschritte.

Also werden für zumindest zwei aufeinander folgende Messzyklen sich voneinander unterscheidende Eindeutigkeitsbereiche für die Entfernung und/oder unterschiedliche Eindeutigkeitsbereiche für die relative Geschwindigkeit vorbestimmt. Angestrebt wird hierdurch die Erhöhung des gesamten Eindeutigkeitsbereichs der Gesamtmessung. Um die Genauigkeit der Bestimmung der Entfernung und/oder der relativen Geschwindigkeit noch weiter zu erhöhen, können für die Eindeutigkeitsbereiche der einzelnen Messzyklen bestimmte Bedingungen definiert werden:

Beispielsweise können die sich voneinander unterscheidenden Eindeutigkeitsbereiche für die relative Geschwindigkeit auf die Weise vorbestimmt werden, dass sie keinen gemeinsamen Teiler aufweisen. Des Weiteren werden diese unterschiedlichen Eindeutigkeitsbereiche für die relative Geschwindigkeit - und auch diejenigen für die Entfernung, wenn die Entfernung zusammen mit der relativen Geschwindigkeit ausgewertet wird - bevorzugt derart festgelegt, dass die Unterschiede zwischen den einzelnen mehrdeutigen Messwerten größer als die oben genannten Toleranzwertebereiche sind. Auf der anderen Seite sollte die Variation der Eindeutigkeitsbereiche für die Entfernung nicht zu groß sein, um die Auflösung der Entfernung nicht zu verschlechtern.

Bei den Eindeutigkeitsbereichen für die Entfernung hat sich als vorteilhaft herausgestellt, wenn selbige um etwa 2 % bis 4 % variiert werden.

Eine erfindungsgemäße Fahrerassistenzeinrichtung ist zum eindeutigen Bestimmen einer Entfernung und/oder einer relativen Geschwindigkeit eines Objektes bezüglich eines die Fahrerassistenzeinrichtung aufweisenden Kraftfahrzeugs ausgebildet. Die Fahrerassistenzeinrichtung umfasst ein FMCW-Radargerät, welches dazu ausgebildet ist, in einem Messzyklus eine vorbestimmte Folge von frequenzmodulierten Signalpulsen zu senden. Durch diese Folge von frequenzmodulierten Signalpulsen ist ein Eindeutigkeitsbereich für die Entfernung und/oder ein Eindeutigkeitsbereich für die relative Geschwindigkeit bestimmt. Die Fahrerassistenzeinrichtung umfasst ferner eine Signalverarbeitungseinrichtung, die dazu ausgelegt ist, abhängig von einem Empfangssignal die Entfernung und/oder die relative Geschwindigkeit zu bestimmen. In der Fahrerassistenzeinrichtung sind für zumindest zwei aufeinander folgende Messzyklen sich voneinander unterscheidende Eindeutigkeitsbereiche für die Entfernung und/oder sich voneinander unterscheidende Eindeutigkeitsbereich für die relative Geschwindigkeit festlegbar. Die Signalverarbeitungseinrichtung ist ferner dazu ausgelegt, die Entfernung und/oder die relative Geschwindigkeit anhand von jeweils zumindest einem Messwert für die Entfernung und/oder für die relative Geschwindigkeit aus jedem Messzyklus zu bestimmen.

Ein erfindungsgemäßes Kraftfahrzeug umfasst eine erfindungsgemäße Fahrerassistenzeinrichtung. Das Kraftfahrzeug ist bevorzugt ein Personenkraftwagen.

Die Fahrerassistenzeinrichtung kann beispielsweise ein Überwachungssystem für einen Totwinkelbereich des Kraftfahrzeugs und/oder ein Unfallfrüherkennungssystem, insbesondere für die Auffahrunfälle von hinten und/oder ein ACC(Additive Course Control)-System sein.

Die mit Bezug auf das erfindungsgemäße Verfahren vorgestellten bevorzugten Ausführungsformen und deren Vorteile gelten entsprechend für die erfindungsgemäße Fahrerassistenzeinrichtung, wie auch für das erfindungsgemäße Kraftfahrzeug.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar.

Die Erfindung wird nun anhand einzelner bevorzugter Ausführungsbeispiel, wie auch unter Bezugnahme auf die beigefügten Zeichnungen näher erläutert.

Es zeigen:

Fig. 1 in schematischer Darstellung eine Draufsicht auf ein Kraftfahrzeug gemäß einer Ausführungsform der Erfindung;

Fig. 2 ein Blockschaltbild eines Radargeräts, wie es in dem Kraftfahrzeug gemäß Fig. 1 eingesetzt wird;

Fig. 3 eine zeitliche Folge von linear-frequenzmodulierten Signalpulsen, die durch ein Radargerät der Fahrerassistenzeinrichtung gesendet werden.

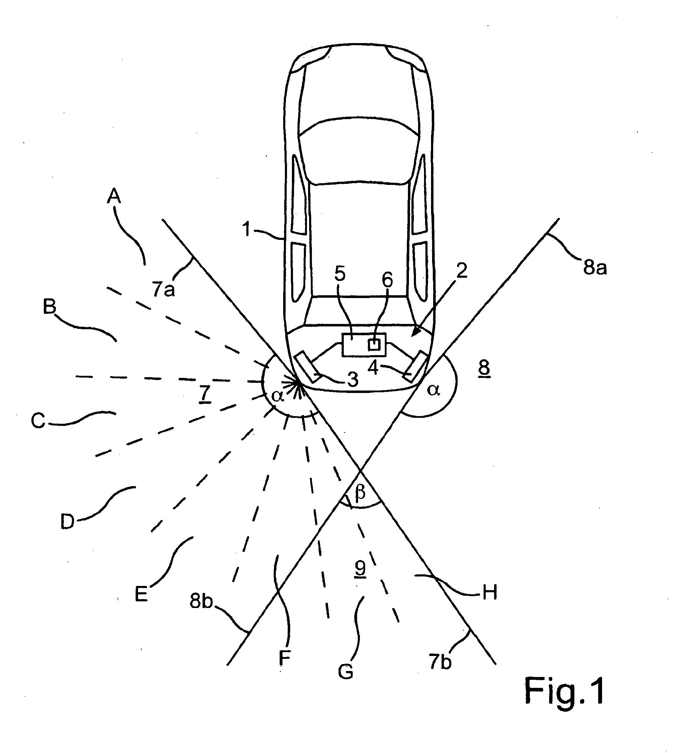

Ein in Fig. 1 dargestelltes Kraftfahrzeug 1 umfasst eine Fahrerassistenzeinrichtung 2, die den Fahrer beim Führen des Kraftfahrzeugs 1 unterstützt. Das Kraftfahrzeug 1 ist im Ausführungsbeispiel ein Personenkraftwagen. Die Fahrerassistenzeinrichtung 2 kann beispielsweise ein Überwachungssystem für den Totwinkelbereich und/oder ein Unfallfrüherkennungssystem und/oder ein ACC-System sein. Die Fahrerassistenzeinrichtung 2 umfasst ein erstes Radargerät 3 sowie ein zweites Radargerät 4. Das erste Radargerät 3 ist in einer linken Ecke eines hinteren Stoßfängers und das zweite Radargerät 4 in einer rechten Ecke desselben Stoßfängers angeordnet. Das erste und das zweite Radargerät 3, 4 sind Frequenzmodulation-Dauerstrich-Radargeräte (Frequency Modulated Continuous Wave Radar, FMCW-Radar).

Das erste und das zweite Radargerät 3, 4 sind mit einer Signalverarbeitungseinrichtung 5 gekoppelt. Selbige Signalverarbeitungseinrichtung 5 kann zum Beispiel einen für das erste und das zweite Radargerät 3, 4 gemeinsamen Mikrokontroller 6 umfassen, wie auch einen in den Figuren nicht dargestellten digitalen Signalprozessor. Alternativ können auch zwei Mikrokontroller 6 und/oder zwei digitale Signalprozessoren vorgesehen sein, die zum Beispiel über einen im Kraftfahrzeug 1 vorhandenen Kommunikationsbus miteinander kommunizieren.

Das erste Radargerät 3 weist einen ersten Erfassungsbereich 7 auf. Der Erfassungsbereich 7 ist in horizontaler Richtung durch einen Azimutwinkelbereich α definiert, welcher in Fig. 1 durch zwei Linien 7a, 7b begrenzt ist. Entsprechend weist das zweite Radargerät 4 einen Erfassungsbereich 8 auf, welcher durch einen entsprechenden Azimutwinkelbereich α definiert ist, nämlich in horizontaler Richtung. Der Azimutwinkelbereich a ist durch zwei Linien 8a, 8b begrenzt. Die Azimutwinkelbereiche α betragen im Ausführungsbeispiel etwa 170°. Die Erfassungsbereiche 7, 8 der Radargeräte 3, 4 überschneiden sich, sodass ein Überlappungsbereich 9 gegeben ist. Der Überlappungsbereich 9 ist durch die Linien 7b, 8b winkelig begrenzt. Im Ausführungsbeispiel beträgt ein Öffnungswinkel β des Überlappungsbereichs 9 etwa 70°. In ihren jeweiligen Erfassungsbereichen 7, 8 können die Radargeräte 3, 4 Objekte orten. Insbesondere können die Radargeräte 3, 4 eine Entfernung eines Objektes von dem jeweiligen Radargerät 3, 4, wie auch eine relative Geschwindigkeit eines Objektes bezüglich des Kraftfahrzeugs 1 bestimmen.

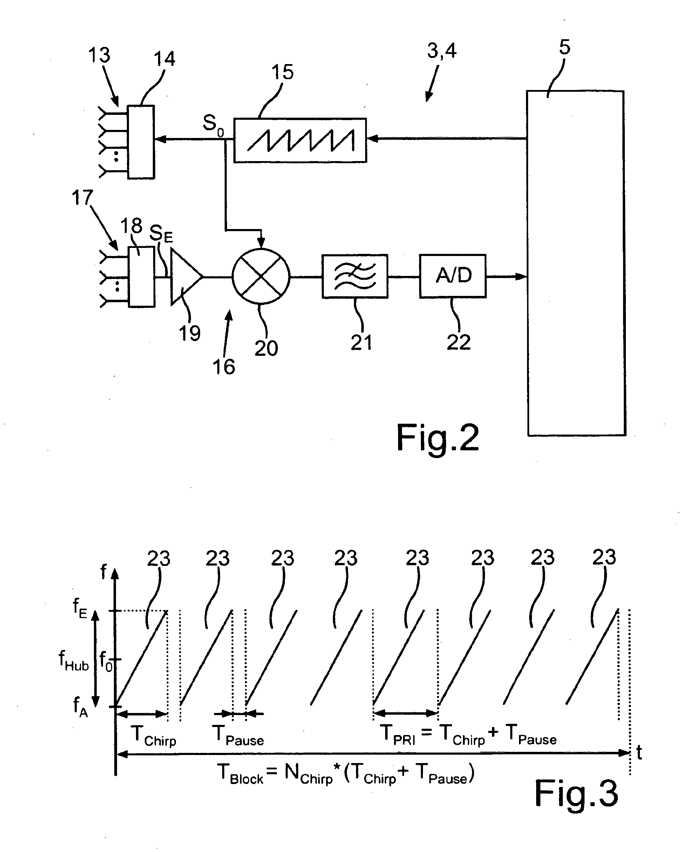

Fig. 2 zeigt ein Blockschaltbild eines einzelnen Radargeräts 3, 4 einschließlich der Signalverarbeitungseinheit 5. Das Radargerät 3, 4 umfasst eine Sendeantenneneinheit 13, die eine Antennengruppe bzw. Antennenmatrix (Array) sein und ein Vielzahl von Patch-Antennen umfassen kann. Die Sendeantenneneinheit 13 wird über eine Speiseschaltung 14 gespeist. Die Sendeantenneneinheit 13 wird mithilfe eines lokalen Oszillators 15 gespeist, welcher ein Sendesignal $S_0$ erzeugt. Dieses Sendesignal $S_0$ ist eine frequenzmodulierte elektromagnetische Welle, deren Frequenz im Ausführungsbeispiel einen sägezahnförmigen Verlauf aufweist. Dieser wird weiter unten unter Bezug auf Fig. 3 näher erläutert. Also ist das Sendesignal $S_0$ frequenzmoduliert; seine Frequenz läuft periodisch zwischen einem ersten Frequenzwert und einem zweiten Frequenzwert. Die mittlere Frequenz des Sendesignals $S_0$ beträgt im Ausführungsbeispiel 24 GHz.

Der lokale Oszillator 15 wird durch die Signalverarbeitungseinheit 5 angesteuert. Der Oszillator 15 ist zum Beispiel ein spannungsgesteuerter Oszillator (Voltage Control Oszillator), welcher das Sendesignal $S_0$ mit einer solchen Frequenz erzeugt, die abhängig von der Amplitude einer von der Signalverarbeitungseinheit 5 an dem Oszillator 15 bereitgestellten Gleichspannung ist.

Das Radargerät 3, 4 umfasst außerdem einen Empfänger 16. Dieser Empfänger 16 umfasst eine Empfangsantenneneinheit 17, die im Ausführungsbeispiel eine Vielzahl von Patch-Antennen umfassen kann. Die Empfangsantenneneinheit 17 kann ebenfalls eine zweidimensionale Antennenmatrix (Array) sein. Die Empfangsantenneneinheit 17 ist mit einer Speiseschaltung 18 gekoppelt. Die Speiseschaltung 18 stellt ein Signal $S_E$ bereit, welches ein Empfangssignal ist. Das empfangene Signal $S_E$ wird mithilfe eines rauscharmen Verstärkers 19 (Low Noise Amplifier) verstärkt, mithilfe eines Mischers 20 herabgemischt, mithilfe eines Tiefpassfilters 21 tiefpassgefiltert und mittels eines Analog-Digital-Wandlers 22 analog-digital-gewandelt. Zum Herabmischen des empfangenen Signals $S_E$ wird das Sendesignal $S_0$ verwendet; das Sendesignal $S_0$ wird an den Mischer 20 geführt, nämlich beispielsweise mithilfe eines Richtkopplers. Das empfangene digitale Signal $S_E$ wird dann mithilfe der Signalverarbeitungseinrichtung 5 verarbeitet. Aus dem Signal $S_E$ bestimmt die Signalverarbeitungseinrichtung 5 zum Beispiel die Entfernung des Objektes, wie auch eine relative Geschwindigkeit.

Fig. 2 ist eine Prinzipdarstellung des Radargeräts 3, 4. Zum Beispiel kann das Radargerät 3, 4 auch weitere Empfänger 16 mit jeweils einer Empfangsantenneneinheit 17 beinhalten; das Radargerät 3, 4 kann gleichfalls mehrere Sendeantenneneinheiten 13 beinhalten. Also ist das Radargerät 3, 4 in Fig. 2 lediglich beispielhaft abgebildet.

Die Funktionsweise der Radargeräte 3, 4 wird nachfolgend näher beschrieben:

Die Sendeantenneneinheit 13, und genauer gesagt die Speiseschaltung 14, kann so gesteuert werden, dass sie nacheinander verschiedene Teilbereiche A, B, C, D, E, F, G, H des Erfassungsbereichs 7 beleuchtet. Zum Beispiel kann dazu eine Sendekeule der Sendeantenneneinheit 13 elektronisch in horizontaler Richtung geschwenkt werden (nach dem Phase-Array-Prinzip). Die Empfangsantenneneinheit 17 kann in diesem Fall in horizontaler Richtung eine breite Empfangscharakteristik aufweisen, mit der der gesamte Erfassungsbereich 7 abgedeckt wird. Andere Ausgestaltungen können alternativ oder ergänzend schmale Empfangswinkelbereiche in Verbindung mit breiten Sendekeulen realisieren.

In Fig. 1 sind der Übersicht halber lediglich die Teilbereiche A bis H des Erfassungsbereichs 7 des ersten Radargeräts 3 dargestellt. Entsprechend ist hier auch der Erfassungsbereich 8 des Radargeräts 4 in mehrere Teilbereiche unterteilt, die durch das Radargerät 4 nacheinander erfasst werden. Wenngleich sich die weitere Beschreibung lediglich auf das Radargerät 3 bezieht, entspricht die Funktionsweise des Radargeräts 4 der des Radargeräts 3.

In einem einzelnen Messzyklus werden die Teilbereiche A bis H durch das Radargerät 3 nacheinander erfasst. In einem einzelnen Messzyklus sendet das Radargerät 3 für jeden Teilbereich A bis H (also pro Beam) separat jeweils eine vorbestimmte Folge von frequenzmodulierten Signalpulsen (Chirps). Also sendet das Radargerät 3 pro Messzyklus und pro Teilbereich A bis H jeweils eine Folge von frequenzmodulierten Signalpulsen. Und zwar sendet das Radargerät 3 jeweils einen Block von 16 bis 64 frequenzmodulierten Signalpulsen. Ein solcher Block bzw. eine solche Folge von linear-frequenzmodulierten Signalpulsen 23 ist in Fig. 3 dargestellt. Gezeigt ist die Funktion einer Frequenz f in Abhängigkeit von der Zeit t. Die Parameter der Folge von Signalpulsen 23 sind:

- eine Zeitdauer $T_{Chirp}$ eines einzelnen frequenzmodulierten Signalpulses,
- eine Zeitdauer $T_{Pause}$ einer Pause zwischen den einzelnen Signalpulsen 23,
- eine Anzahl $N_{Chirp}$ von Signalpulsen innerhalb eines Blocks,
- ein Frequenzhub $f_{Hub}$ - eine Differenz zwischen einer oberen Frequenz $f_E$ und einer unteren Frequenz $f_A$,
- eine mittlere Frequenz $f_0$ = 24 GHz.

Davon können folgende Parameter abgeleitet werden:

- eine Impulsfolgefrequenz PRF = $1/(T_{Chirp}\ T_{Pause})$ und
- eine Zeitdauer eines Gesamtblocks $T_{Block}$ = $N_{Chirp}(T_{Chirp} + T_{Pause})$.

Der Frequenzhub $f_{Hub}$ bestimmt die Auflösung für die Bestimmung der Entfernung. Die Zeitdauer $T_{Block}$ des gesamten Blocks bestimmt hingegen die Auflösung der Dopplerfrequenz und somit die Auflösung der Bestimmung der relativen Geschwindigkeit. Darüber hinaus bestimmt die Impulsfolgefrequenz PRF einen Eindeutigkeitsbereich $V_{Ein}$ für die Bestimmung der relativen Geschwindigkeit (den sogenannten Doppler-Eindeutigkeitsbereich). Ferner bestimmt der Frequenzhub $f_{Hub}$, wie auch eine Abtastrate des Analog-Digital-Wandlers 22 einen Eindeutigkeitsbereich $R_{Ein}$ für die Bestimmung der Entfernung (den Entfernungseindeutigkeitsbereich).

Der Eindeutigkeitsbereich $R_{Ein}$ der Entfernungsmessung ergibt sich aus der nachfolgenden Gleichung:

$$R_{Ein} = \frac{f_A \cdot T_{Chirp}}{2} \cdot \frac{c}{2 \cdot f_{Hub}},$$

wobei c die Lichtgeschwindigkeit von 3 x $10^8$ m/s und $f_A$ die Abtastrate des Analog-Digital-Wandlers 22 bezeichnen.

Die Entfernungsauflösung $\Delta R$ ergibt sich aus der folgenden Formel:

$$\Delta R = \frac{c}{2 \cdot f_{Hub}} \ .$$

Der Eindeutigkeitsbereich $V_{Ein}$ ergibt sich aus der folgenden Beziehung:

$$V_{Ein} = PRF \cdot \frac{c}{2 \cdot f_0} \ .$$

Schließlich kann die Geschwindigkeitsauflösung $\Delta V$ wie folgt berechnet werden:

$$\Delta V = \frac{1}{T_{Block}} \cdot \frac{c}{2 \cdot f_0} \ .$$

Vorliegend soll der gesamte Eindeutigkeitsbereich für die Bestimmung der endgültigen relativen Geschwindigkeit sowie der Entfernung erhöht werden. Der Eindeutigkeitsbereich $V_{Ein}$ für die Bestimmung der Geschwindigkeit wird im Beispiel zwischen drei aufeinander folgenden Messzyklen verändert, indem die Impulsfolgefrequenz PRF verändert wird. Die Mehrdeutigkeiten bei der Bestimmung der relativen Geschwindigkeit werden für den gesamten Geschwindigkeitsbereich von -200 km/h bis +200 km/h aufgelöst. Ebenfalls wird der Eindeutigkeitsbereich $R_{Ein}$ für die Bestimmung der Entfernung im Ausführungsbeispiel zwischen drei aufeinander folgenden Messzyklen verändert. Dies wird durch die Änderung des Frequenzhubes $f_{Hub}$ von Messzyklus zu Messzyklus erzielt. Dabei sollen Ziele mit einer Entfernung größer als $R_{Ein}$ unterdrückt werden und dem Fahrer nicht angezeigt werden. Lediglich beispielsweise seien vorliegend folgende Werte genannt:

Jeder erste Messzyklus von drei Messzyklen:

$N_{Chirp}$ = 16;
$T_{Chirp}$ = 256 μs;
$T_{Pause}$ = 144 μs;
PRF = 1/400 μs = 2,5 kHz;
$f_{Hub}$ = 250 MHz

Jeder zweite Messzyklus von drei Messzyklen:

$N_{Chirp}$ = 16;
$T_{Chirp}$ = 256 μs;
$T_{Pause}$ = 244 μs;
PRF = 1/500 μs = 2 kHz;
$f_{Hub}$ = 257 MHz

Jeder dritte Messzyklus von drei Messzyklen:

$N_{Chirp}$ = 16;
$T_{Chirp}$ = 256 μs;
$T_{Pause}$ = 411 μs;
PRF = 1/667 μs = 1,5 kHz;
$f_{Hub}$ = 264 MHz

Für die drei Messzyklen ergeben sich also jeweils unterschiedliche Eindeutigkeitsbereiche $R_{Ein}$, $V_{Ein}$ sowohl für die Bestimmung der Entfernung als auch für die Bestimmung der Geschwindigkeit. Bei dem oben dargestellten Beispiel beträgt der Eindeutigkeitsbereich $R_{Ein}$ für den ersten Messzyklus etwa 76,8 m, für den zweiten Messzyklus etwa 74,7 m und für den dritten Messzyklus etwa 72,7 m. Der Eindeutigkeitsbereich $V_{Ein}$ für die Bestimmung der Geschwindigkeit beträgt für den ersten Messzyklus etwa 56,25 km/h, für den zweiten Messzyklus etwa 45 km/h und für den dritten Messzyklus etwa 34 km/h.

Nach einem jeden Messzyklus ermittelt die Signalverarbeitungseinheit 5 jeweils einige Messwerte sowohl für die Entfernung als auch für die relative Geschwindigkeit, dies aufgrund der jeweiligen Mehrdeutigkeiten. Die endgültige Entfernung sowie die endgültige relative Geschwindigkeit bestimmt die Signalverarbeitungseinrichtung 5 wie folgt:

Die Signalverarbeitungseinrichtung 5 nimmt jeden im ersten Messzyklus ermittelten Messwert für die relative Geschwindigkeit, betrachtet sie als mögliche Kandidaten für den endgültigen Geschwindigkeitswert und definiert für jeden solchen Messwert einen Toleranzwertebereich. Der Toleranzwertebereich kann wertmäßig der Auflösung der Dopplerfrequenz entsprechen. Um jeden Messwert der relativen Geschwindigkeit aus dem ersten Messzyklus ist also jeweils ein gleicher Toleranzwertebereich festgelegt. Im zweiten Messzyklus ermittelt die Signalverarbeitungseinrichtung 5 ebenfalls mehrdeutige Messwerte für die relative Geschwindigkeit. Die Signalverarbeitungseinrichtung 5 überprüft dann, in welchen der festgelegten Toleranzwertebereiche die neu ermittelten Messwerte fallen. Entsprechendes macht die Signalverarbeitungseinrichtung 5 im dritten Messzyklus und gegebenenfalls in weiteren Messzyklen. Fallen eine vorbestimmte Anzahl von Messwerten in einen der Toleranzwertebereiche, zum Beispiel zwei Messwerte, so wird der diesem Toleranzwertebereich zugeordnete Messwert aus dem ersten Messzyklus als endgültiger Messwert für die relative Geschwindigkeit verwendet.

Gleichzeitig ermittelt die Signalverarbeitungseinrichtung 5 im ersten Messzyklus einige mehrdeutige Messwerte für die Entfernung. Auch um die Messwerte für die Entfernung kann jeweils ein Toleranzwertebereich definiert werden. Es ist jedoch im

Ausführungsbeispiel lediglich derjenige Messwert für die Entfernung interessant, welcher in dem Eindeutigkeitsbereich des ersten Messzyklus liegt. Die Signalverarbeitungseinrichtung 5 überprüft, ob diejenigen Messwerte aus dem zweiten und dritten und gegebenenfalls jedem weiteren Messzyklus, die in dem jeweiligen Eindeutigkeitsbereich liegen, dem Messwert aus dem Eindeutigkeitsbereich des ersten Messzyklus entsprechen. Der Toleranzwertebereich hat hier die Bedeutung, dass selbst bei hoch genauen Messungen die Messwerte bei unterschiedlichen Messzyklen voneinander abweichen können. Fallen also die Messwerte aus dem Eindeutigkeitsbereich des zweiten und des dritten Messzyklus in den Toleranzwertebereich um den Messwert aus dem Eindeutigkeitsbereich des ersten Messzyklus, so befindet sich das Objekt in den jeweiligen Eindeutigkeitsbereichen. Das Objekt wird dann angezeigt, und der Messwert aus dem Eindeutigkeitsbereich des ersten Messzyklus wird als endgültiger Messwert für die Entfernung verwendet. Stimmen hingegen die Messwerte aus den jeweiligen Eindeutigkeitsbereichen aller Messzyklen nicht überein, so ist dies ein Zeichen dafür, dass sich das Objekt außerhalb der Eindeutigkeitsbereiche befindet. In diesem Fall wird das Objekt herausgefiltert, und die Entfernung wird nicht bestimmt. Hier handelt es sich um so genannte Überreichweiten-Objekte.

Insgesamt werden also ein Verfahren sowie eine Fahrerassistenzeinrichtung bereitgestellt, die eine eindeutige Bestimmung einer Entfernung sowie einer relativen Geschwindigkeit eines Objektes bezüglich eines Kraftfahrzeugs 1 ermöglichen. Es wird insgesamt ein sehr großer Eindeutigkeitsbereich für die gesamte Messung der Entfernung und der relativen Geschwindigkeit erreicht. Und zwar werden zumindest zwei Messzyklen bereitgestellt, die sich hinsichtlich ihrer Eindeutigkeitsbereiche für die Entfernung und/oder ihrer Eindeutigkeitsbereiche für die relative Geschwindigkeit voneinander unterscheiden, wobei diese Eindeutigkeitsbereiche vorbestimmt sind. Die Signalverarbeitungseinrichtung 5 ermittelt dann die Entfernung sowie die relative Geschwindigkeit anhand von den jeweiligen Messwerten für die Entfernung und/oder für die relative Geschwindigkeit aus jedem Messzyklus.

**Patentansprüche**

1. Verfahren zum eindeutigen Bestimmen einer Entfernung und/oder einer relativen Geschwindigkeit eines Objektes bezüglich eines Kraftfahrzeugs (1) mittels eines Frequenzmodulation-Dauerstrich-Radargeräts (3, 4) des Kraftfahrzeugs (1), wobei in einem Messzyklus eine vorbestimmte Folge von innerhalb eines gleichen Frequenzhubs ($f_{Hub}$) über einer gleichen Zeitdauer ($T_{Chirp}$) frequenzmodulierten Signalpulsen (23) durch das Frequenzmodulation-Dauerstrich-Radargerät (3, 4) gesendet wird, durch welche ein Eindeutigkeitsbereich ($R_{Ein}$) für die Entfernung und/oder ein Eindeutigkeitsbereich ($V_{Ein}$) für die relative Geschwindigkeit bestimmt ist,
   **dadurch gekennzeichnet, dass**
   für zumindest zwei aufeinander folgende Messzyklen sich voneinander unterscheidende Eindeutigkeitsbereiche ($R_{Ein}$) für die Entfernung und/oder sich voneinander unterscheidende Eindeutigkeitsbereiche ($V_{Ein}$) für die relative Geschwindigkeit festgelegt werden und die Entfernung und/oder die relative Geschwindigkeit anhand von jeweils zumindest einem Messwert für die Entfernung und/oder für die relative Geschwindigkeit aus jedem Messzyklus bestimmt wird, wobei das Festlegen von unterschiedlichen Eindeutigkeitsbereichen ($R_{Ein}$) für die Entfernung beinhaltet, dass sich voneinander unterscheidende Frequenzhübe ($f_{Hub}$) der jeweiligen Folgen von frequenzmodulierten Signalpulsen (23) eingestellt werden.

2. Verfahren nach Anspruch 1,
   **dadurch gekennzeichnet, dass**
   das Festlegen von unterschiedlichen Eindeutigkeitsbereichen ($V_{Ein}$) für die relative Geschwindigkeit beinhaltet, dass sich voneinander unterscheidende Impulsfolgefrequenzen (PRF) der jeweiligen Folgen von frequenzmodulierten Signalpulsen (23) eingestellt werden.

3. Verfahren nach Anspruch 2,
   **dadurch gekennzeichnet, dass**
   das Einstellen von sich voneinander unterscheidenden Impulsfolgefrequenzen (PRF) durch Veränderung einer Zeitdauer ($T_{Pause}$) einer Pause zwischen den Signalpulsen (23) erfolgt.

4. Verfahren nach einem der vorhergehenden Ansprüche,
   **dadurch gekennzeichnet, dass**
   unter Verzicht auf eine Auflösung von Mehrdeutigkeiten die Entfernung nur dann bestimmt wird, wenn ein auf denjenigen Messwert aus jedem Messzyklus bezogenes vorbestimmtes Eindeutigkeitskriterium erfüllt wird, welcher in dem jeweiligen Eindeutigkeitsbereich liegt.

5. Verfahren nach Anspruch 4,
   **dadurch gekennzeichnet, dass**
   das vorbestimmte Eindeutigkeitskriterium beinhaltet, dass die Messwerte aus den jeweiligen Eindeutigkeitsbereichen mit einer vorbestimmten Genauigkeit miteinander übereinstimmen.

6. Verfahren nach einem der vorhergehenden Ansprüche,
   **dadurch gekennzeichnet, dass**
   die Bestimmung der relativen Geschwindigkeit beinhaltet, dass zu einem ersten Messzyklus der zumindest zwei Messzyklen zumindest zwei mögliche Messwerte für die relative Geschwindigkeit bestimmt werden und derjenige Messwerte als ein endgültiger Messwerte für die relative Geschwindigkeit verwendet wird, für welchen ein vorbestimmtes Detektionskriterium erfüllt wird.

7. Verfahren nach Anspruch 6,
   **dadurch gekennzeichnet, dass**
   um jeden möglichen Messwert aus dem ersten Messzyklus jeweils ein Toleranzwertebereich definiert wird und das vorbestimmte Detektionskriterium beinhaltet, dass zumindest eine vorbestimmte Anzahl von Messwerten aus den anderen Messzyklen in den jeweiligen Toleranzwertebereich fallen.

8. Verfahren nach einem der vorhergehenden Ansprüche,
**dadurch gekennzeichnet, dass**
die sich voneinander unterscheidenden Eindeutigkeitsbereiche für die relative Geschwindigkeit derart vorbestimmt werden, dass sie keinen gemeinsamen Teiler aufweisen.

9. Fahrerassistenzeinrichtung (2) zum eindeutigen Bestimmen einer Entfernung und/oder einer relativen Geschwindigkeit eines Objektes bezüglich eines Kraftfahrzeugs (1), mit:

- einem Frequenzmodulation-Dauerstrich-Radargerät (3, 4), welches dazu ausgebildet ist, in einem Messzyklus eine vorbestimmte Folge von innerhalb eines gleichen Frequenzhubs ($f_{Hub}$) über einer gleichen Zeitdauer ($T_{Chrip}$) frequenzmodulierten Signalpulsen (23) zu senden, durch welche ein Eindeutigkeitsbereich ($R_{Ein}$) für die Entfernung und/oder ein Eindeutigkeitsbereich ($V_{Ein}$) für die relative Geschwindigkeit bestimmt ist, und
- einer Signalverarbeitungseinrichtung (5) zum Bestimmen der Entfernung und/oder der relativen Geschwindigkeit abhängig von einem Empfangssignal ($S_E$),
**dadurch gekennzeichnet, dass**
in der Fahrerassistenzeinrichtung (2) für zumindest zwei aufeinander folgende Messzyklen sich voneinander unterscheidende Eindeutigkeitsbereiche ($R_{Ein}$) für die Entfernung durch sich voneinander unterscheidende Frequenzhübe ($f_{Hub}$) der jeweiligen Folgen von frequenzmodulierten Signalpulsen (23) und/oder sich voneinander unterscheidende Eindeutigkeitsbereiche ($V_{Ein}$) für die relative Geschwindigkeit festlegbar sind und die Signalverarbeitungseinrichtung (5) dazu ausgelegt ist, die Entfernung und/oder die relative Geschwindigkeit anhand von jeweils zumindest einem Messwert für die Entfernung und/oder für die relative Geschwindigkeit aus jedem Messzyklus zu bestimmen.

10. Kraftfahrzeug (1) mit einer Fahrerassistenzeinrichtung nach Anspruch 9.

## Claims

1. Method for unambiguous determination of a range to and/or of a relative velocity of an object with respect to a motor vehicle (1) by means of a frequency-modulation continuous-wave radar (3, 4) in the motor vehicle (1), with a predetermined sequence of signal pulses (23) frequency-modulated within an identical frequency shift ($f_{Shift}$) over an identical time duration ($T_{Chirp}$) being transmitted by the frequency-modulation continuous-wave radar (3, 4) in a measurement cycle, by means of which sequence an unambiguity area ($R_{Un}$) is determined for the range, and/or an unambiguity area ($V_{Un}$) is determined for the relative velocity, **characterized in that** mutually different unambiguity areas ($R_{Un}$) for the range and/or mutually different unambiguity areas ($V_{Un}$) for the relative velocity are defined for at least two successive measurement cycles, and the range and/or the relative velocity are/is determined on the basis of in each case at least one measured value for the range and/or for the relative velocity from each measurement cycle the definition of different unambiguity areas ($R_{Un}$) for the range including mutually different frequency shifts ($f_{Shift}$) being set for the respective sequences of frequency-modulated signal pulses (23).

2. Method according to Claim 1,
**characterized in that**
the definition of different unambiguity areas ($V_{Un}$) for the relative velocity includes mutually different pulse repetition frequencies (PRF) being set for the respective sequences of frequency-modulated signal pulses (23).

3. Method according to Claim 2,
**characterized in that**
mutually different pulse repetition frequencies (PRF) are set by variation of a time duration ($T_{Pause}$) of a pause between the signal pulses (23).

4. Method according to one of the preceding claims,
**characterized in that**,
without resolving unambiguities, the range is determined only when a predetermined unambiguity criterion is satisfied which relates to that measured value from each measurement cycle which is in the respective unambiguity area.

5. Method according to Claim 4,
**characterized in that**
the predetermined unambiguity criterion includes the measured values from the respective unambiguity areas matching one another with a predetermined accuracy.

6. Method according to one of the preceding claims,
**characterized in that**
the determination of the relative velocity includes at least two possible measured values for the relative velocity being determined for a first measurement cycle of the at least two measurement cycles, and those measured values for which a predetermined detection criterion is satisfied being used as final measured values for the relative velocity.

7.  Method according to Claim 6,
    **characterized in that**
    a respective tolerance value band is defined around every possible measured value from the first measurement cycle, and the predetermined detection criterion includes at least a predetermined number of measured values from the other measurement cycles falling in the respective tolerance value band.

8.  Method according to one of the preceding claims,
    **characterized in that**
    the mutually different unambiguity areas for the relative velocity are predetermined such that they do not have a common divisor.

9.  Driver assistance device (2) for unambiguous determination of a range to and/or of a relative velocity of an object with respect to a motor vehicle (1), having:

    - a frequency-modulation continuous-wave radar (3, 4) which is designed to transmit a predetermined sequence of signal pulses (23) frequency-modulated within an identical frequency shift ($f_{Shift}$) over an identical time duration ($T_{Chirp}$) in a measurement cycle, by means of which sequence an unambiguity area ($R_{Un}$) is determined for the range, and/or an unambiguity area ($V_{Un}$) is determined for the relative velocity, and

    - a signal processing device (5) for determination of the range and/or of the relative velocity as a function of a received signal ($S_E$),
    **characterized in that**
    in the driver assistance device (2) for at least two successive measurement cycles, it is possible to define mutually different unambiguity areas ($R_{Un}$) for the range by mutually different frequency shifts ($f_{Shift}$) of the respective sequences of frequency-modulated signal pulses (23) and/or mutually different unambiguity areas ($V_{Un}$) for the relative velocity, and the signal processing device (5) is designed to determine the range and/or the relative velocity on the basis of in each case at least one measured value for the range and/or for the relative velocity from each measurement cycle.

10. Motor vehicle (1) having a driver assistance device according to Claim 9.

## Revendications

1.  Procédé de détermination univoque d'une distance et/ou d'une vitesse relative d'un objet en référence à un véhicule automobile (1) au moyen d'un appareil radar à ondes entretenues à modulation de fréquence (3, 4) du véhicule automobile (1), une séquence prédéfinie d'impulsions de signal (23) modulées en fréquence à l'intérieur d'une excursion de fréquence ($f_{Hub}$) identique sur une durée ($T_{Chirp}$) identique étant émise dans un cycle de mesure par l'appareil radar à ondes entretenues à modulation de fréquence (3, 4), par le biais de laquelle sont déterminées une plage d'univocité ($R_{Ein}$) pour la distance et/ou une plage d'univocité ($V_{Ein}$) pour la vitesse relative,
    **caractérisé en ce que**
    des plages d'univocité ($R_{Ein}$) pour la distance mutuellement différentes et/ou des plages d'univocité ($V_{Ein}$) pour la vitesse relative mutuellement différentes sont définies pour au moins deux cycles de mesure successifs, et la distance et/ou la vitesse relative sont déterminées respectivement à l'aide d'au moins une valeur mesurée pour la distance et/ou pour la vitesse relative issue de chaque cycle de mesure, la définition de plages d'univocité ($R_{Ein}$) pour la distance différentes incluant le fait que des excursions de fréquence ($f_{Hub}$) mutuellement différentes sont réglées pour les séquences respectives d'impulsions de signal (23) modulées en fréquence.

2.  Procédé selon la revendication 1, **caractérisé en ce que** la définition de plages d'univocité ($V_{Ein}$) pour la vitesse relative différentes inclut le fait que des fréquences de séquences d'impulsions (PRF) mutuellement différentes sont réglées pour les séquences respectives d'impulsions de signal (23) modulées en fréquence.

3.  Procédé selon la revendication 2, **caractérisé en ce que** le réglage de fréquences de séquences d'impulsions (PRF) mutuellement différentes est effectué en modifiant une durée ($T_{Pause}$) d'une pause entre les impulsions de signal (23).

4.  Procédé selon l'une des revendications précédentes, **caractérisé en ce qu'**en renonçant à une résolution des ambiguïtés, la distance n'est déterminée que lorsqu'un critère d'univocité prédéfini relatif à la valeur mesurée de chaque cycle de mesure est rempli, laquelle se trouve dans la plage d'univocité respective.

5.  Procédé selon la revendication 4, **caractérisé en ce que** le critère d'univocité prédéfini inclut le fait que les valeurs mesurées issues des plages d'univocité respectives coïncident entre elles avec une précision prédéfinie.

6. Procédé selon l'une des revendications précédentes, **caractérisé en ce que** la détermination de la vitesse relative inclut le fait de déterminer au moins deux valeurs mesurées possibles pour la vitesse relative en association avec un premier cycle de mesure parmi les au moins deux cycles de mesure, et d'utiliser comme valeur mesurée définitive pour la vitesse relative la valeur mesurée pour laquelle un critère de détection prédéfini est rempli.

7. Procédé selon la revendication 6, **caractérisé en ce qu'**une plage de tolérance est à chaque fois définie autour de chaque valeur mesurée possible issue du premier cycle de mesure et le critère de détection prédéfini contient le fait qu'au moins un nombre prédéfini de valeurs mesurées issues des autres cycles de mesure se trouvent dans la plage de tolérance correspondante.

8. Procédé selon l'une des revendications précédentes, **caractérisé en ce que** les plages d'univocité pour la vitesse relative mutuellement différentes sont prédéfinies de telle sorte qu'elles ne présentent aucun diviseur commun.

9. Dispositif d'assistance au conducteur (2) destiné à la détermination univoque d'une distance et/ou d'une vitesse relative d'un objet en référence à un véhicule automobile (1), comprenant :

> - un appareil radar à ondes entretenues à modulation de fréquence (3, 4), lequel est configuré pour émettre dans un cycle de mesure une séquence prédéfinie d'impulsions de signal (23) modulées en fréquence à l'intérieur d'une excursion de fréquence ($f_{Hub}$) identique sur une durée ($T_{Chirp}$) identique, par le biais de laquelle sont déterminées une plage d'univocité ($R_{Ein}$) pour la distance et/ou une plage d'univocité ($V_{Ein}$) pour la vitesse relative, et
> - un dispositif de traitement de signal (5) destiné à déterminer la distance et/ou la vitesse relative en fonction d'un signal reçu (SE),
> **caractérisé en ce que**
> dans le dispositif d'assistance au conducteur (2), pour au moins deux cycles de mesure successifs, des plages d'univocité ($R_{Ein}$) pour la distance mutuellement différentes peuvent être définies par des excursions de fréquence ($f_{Hub}$) mutuellement différentes des séquences respectives d'impulsions de signal (23) modulées en fréquence et/ou des plages d'univocité ($V_{Ein}$) pour la vitesse relative mutuellement différentes peuvent être définies, et le dispositif de traitement de signal (5) est conçu pour déterminer la distance et/ou la vitesse relative respectivement à l'aide d'au moins une valeur mesurée pour la distance et/ou pour la vitesse relative issue de chaque cycle de mesure.

10. Véhicule automobile (1) équipé d'un dispositif d'assistance au conducteur selon la revendication 9.

Fig.1

Fig.2

Fig.3

$T_{Chirp}$

$T_{Pause}$

$T_{PRI} = T_{Chirp} + T_{Pause}$

$T_{Block} = N_{Chirp} * (T_{Chirp} + T_{Pause})$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005048209 A1
- DE 2005048209 A1